# FASCICULE DE BREVET EUROPEEN

(11) **EP 3 117 505 B1**
(45) Date de publication et mention de la délivrance du brevet: **01.12.2021**
(21) Numéro de dépôt: 15711304.4
(22) Date de dépôt: 06.03.2015
(51) Int. Cl.: H02K 5/10, F16K 24/04, H02K 9/19

(54) **MOTEUR ELECTRIQUE A REFROIDISSEMENT COMBINE LIQUIDE ET AIR**
ELEKTROMOTOR MIT KOMBINIERTER FLÜSSIGKEITS- UND LUFTKÜHLUNG
ELECTRIC MOTOR WITH COMBINED LIQUID AND AIR COOLING

(30) Priorité: 12.03.2014 FR 1452060
(43) Date de publication de la demande: 18.01.2017
(73) Titulaire: Moteurs Leroy-Somer, 16915 Angouleme Cedex 9 (FR)
(72) Inventeur: LOTZ, Hubert, 90000 Belfort (FR); DOUVRY, Mickaël, 90160 Denney (FR); PERA, Thierry, 90000 Belfort (FR); CICILIANI, Philippe, 25700 Valentigney (FR)
(74) Mandataire: Nony
(86) Numéro de dépôt international: PCT/IB2015/051645
(87) Numéro de publication internationale: WO 2015/136421

(56) Documents cités:
- DE-B3- 10 349 543
- JP-A- H09 191 597
- SU-A1- 597 048

## Description

La présente invention concerne les moteurs électriques, et plus particulièrement les moteurs électriques à refroidissement par liquide, notamment de l'eau.

En raison de la circulation de l'eau, ces moteurs sont soumis intérieurement à des différences de températures relativement importantes. Ces conditions entrainent la formation de condensats pouvant être très abondants. Ceux-ci sont susceptibles d'endommager le moteur et il est donc critique de les évacuer. Une solution usuelle consiste à effectuer des vidanges régulières, grâce à un ou plusieurs trous de vidange situés en position basse du carter du moteur. Cette solution n'est pas entièrement satisfaisante, car elle implique une maintenance régulière engendrant des coûts importants et n'est pas toujours possible en situation opérationnelle.

Les publications DE 202005001931 et DE 10349543 décrivent des moteurs équipés d'un bouchon de purge comprenant une membrane imperméable aux liquides et perméable aux gaz. Les moteurs qui sont décrits dans ces publications ne sont pas refroidis par une circulation d'eau, et ne sont pas soumis à des écarts de température aussi élevés que les machines refroidies par liquide. Par conséquent, le problème de l'évacuation des condensats ne se pose pas de la même manière.

JP09191597 décrit un moteur dont le carter possède une ouverture munie d'une membrane poreuse en résine imperméable à l'eau et perméable à la vapeur d'eau. Cela permet d'empêcher la température interne d'un moteur de s'élever et de fournir une bonne étanchéité.

L'invention vise à améliorer encore les moteurs électriques à refroidissement par circulation d'un liquide, et elle y parvient grâce à un moteur électrique comportant un carter pourvu d'une ouverture munie d'une membrane formant barrière à l'eau liquide entre l'intérieur et l'extérieur dudit carter mais perméable à la vapeur d'eau, qui se caractérise par le fait que le stator est refroidi par liquide et par le fait que le moteur comporte en outre un ventilateur interne pour générer une circulation d'air forcée, la membrane étant située dans une zone où la circulation d'air forcée expose celle-ci du côté intérieur à une pression supérieure à la pression atmosphérique.

L'introduction d'une circulation d'air forcée, en complément de la circulation de liquide, permet de favoriser l'évacuation de l'humidité en facilitant les échanges gazeux avec l'extérieur, du fait du placement de la membrane là où la pression d'air à l'intérieur du moteur est supérieure à la pression atmosphérique.

Le ventilateur est de préférence un ventilateur à éjection radiale d'air ; cela peut permettre d'exposer la membrane à un flux d'air émis par le ventilateur de vitesse plus élevée ; les turbulences créées peuvent favoriser les échanges gazeux et l'évacuation de la vapeur d'eau. Le ventilateur génère un flux d'air passant de préférence dans l'entrefer, et à travers le rotor et le stator. La circulation de l'air à travers le stator permet de refroidir celui-ci par échange thermique avec le liquide de refroidissement parcourant le stator également.

La membrane est de préférence située dans la moitié du moteur la plus proche du ventilateur. Par exemple, dans le cas d'un ventilateur à éjection radiale notamment, la membrane peut occuper une position axiale, sur l'axe de rotation, qui se recoupe au moins partiellement avec celle du ventilateur.

La membrane peut comporter tout matériau présentant la semi-perméabilité requise, notamment un matériau poreux fluoré, de préférence comportant du PTFE.

La membrane peut être fixée à demeure sur le carter. Toutefois, elle est de préférence portée par un bouchon fixé de façon amovible sur le carter. Ce bouchon peut être configuré pour se visser dans l'ouverture précitée du carter. Il peut comporter un corps de forme annulaire, pouvant être métallique.

L'étanchéité de la membrane à l'eau liquide correspond de préférence à un indice de protection IP55 ou supérieure.

L'ouverture peut être disposée dans la partie supérieure du carter, ou en variante dans la partie inférieure du carter, de façon à permettre une vidange de celui-ci. De préférence, l'ouverture est disposée en partie supérieure, afin d'éviter que des condensats ne fassent écran à la diffusion de la vapeur à travers la membrane.

L'étanchéité entre la membrane et le corps du bouchon peut être assurée par un joint, par serrage mécanique, ou par tout autre moyen d'étanchéité usuel.

Les canaux de circulation d'air au stator peuvent être radialement plus extérieurs que les canaux servant à la circulation du liquide de refroidissement.

L'air et le liquide de refroidissement circulent de préférence à contre-courant dans le stator, à l'intérieur du carter, en partie inférieure du moteur, et à co-courant en partie supérieure, ou inversement.

L'air circule dans un sens dans l'entrefer et le rotor, et dans le sens opposé dans le stator.

Le carter peut présenter une double enveloppe au niveau du stator, l'une pour la circulation du liquide, l'autre pour la circulation de l'air.

L'invention a encore pour objet un procédé de refroidissement d'un moteur électrique selon l'invention, tel que défini ci-dessus, comportant un carter, dans lequel on génère une circulation d'air forcée à l'intérieur du moteur et une circulation de liquide dans le stator, le moteur électrique comportant une membrane imperméable à l'eau liquide mais perméable à la vapeur d'eau, la membrane étant située dans une partie du carter où la pression d'air à l'intérieur du carter est supérieure à la pression atmosphérique.

L'invention pourra être mieux comprise à la lecture de la description détaillée qui va suivre, d'un exemple non limitatif de mise en œuvre de celle-ci, et à l'examen du dessin annexé, sur lequel :
- la figure 1 est une représentation schématique et partielle en coupe longitudinale d'un moteur selon l'invention, et

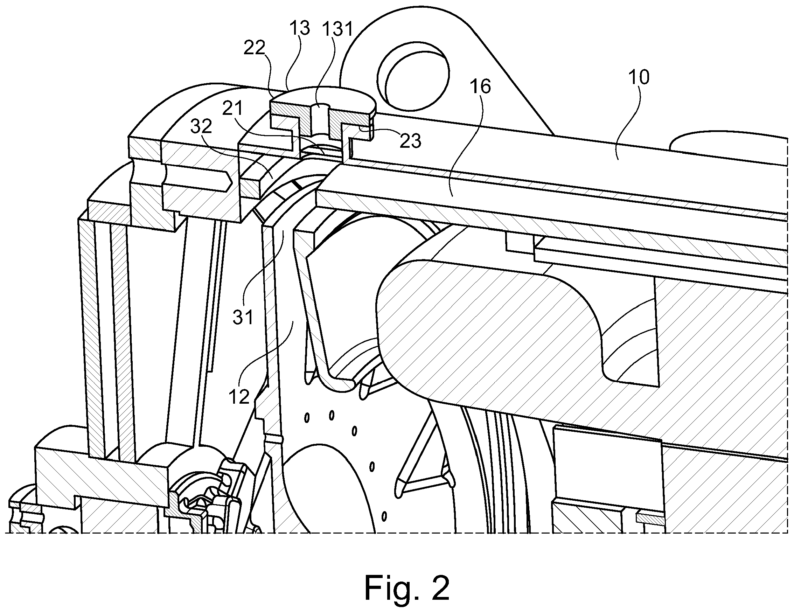

- la figure 2 représente un détail du moteur de la figure 1.

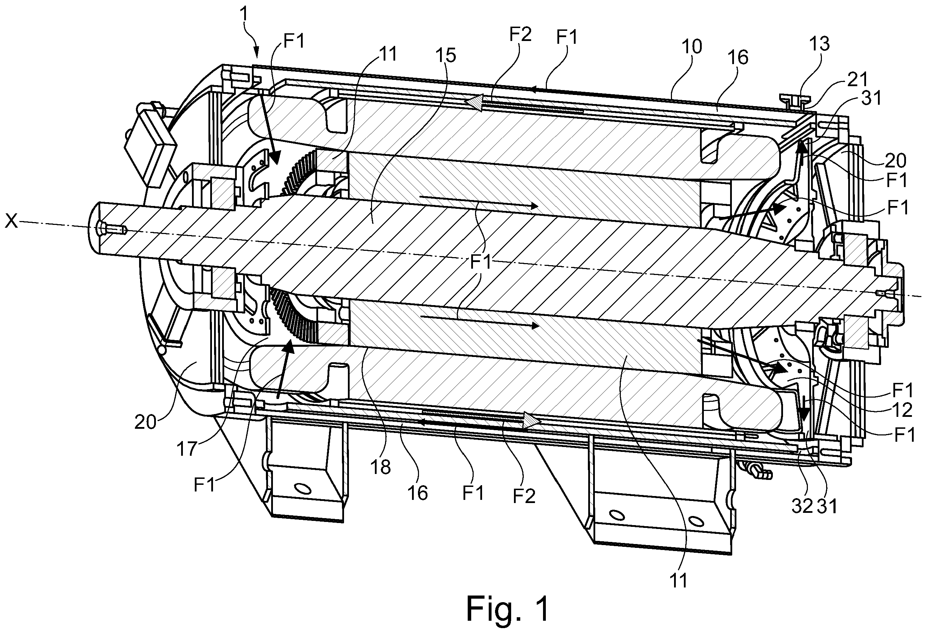

On a représenté à la figure 1 un moteur 1 comportant un carter 10 constituant une enceinte relativement fermée et étanche, présentant de préférence un indice de protection à l'eau IP55.

Le carter est de forme allongée selon un axe X, étant fermé à ses deux extrémités par des flasques 20 qui définissent un côté avant et un côté arrière.

Le carter 10 renferme le rotor 11, lequel entraîne en rotation un ventilateur 12, disposé du côté arrière du moteur.

Le rotor est classiquement porté par un arbre 15 d'axe X, et guidé par des roulements portés par les flasques 20, de façon conventionnelle.

Le ventilateur 12 génère un flux d'air forcé F1 qui circule dans des canaux 16 du stator, le long de celui-ci, de l'arrière vers l'avant.

L'air sortant des canaux 16 débouche à l'avant du rotor dans un espace 17. Il circule ensuite dans l'entrefer 18 et à travers le rotor 11, puis rejoint le ventilateur 12

Ce dernier est de préférence un ventilateur à éjection radiale, comportant une entrée d'air autour de l'arbre 15. Des aubes internes génèrent un flux d'air radial qui quitte le ventilateur 12 par une sortie d'air 31 disposée en périphérie. L'air est éjecté vers des passages 32 d'entrée dans les canaux 16.

Le stator est refroidi par une circulation de liquide F2, par exemple de l'eau, qui provient d'une source extérieure, circule dans des canaux à l'intérieur du stator, et repart vers l'extérieur.

Dans le cas de moteurs utilisés dans des applications marines, le liquide de refroidissement est par exemple de l'eau de mer. La circulation de liquide permet de refroidir le stator.

Le flux d'air F1 est refroidi en circulant dans le stator.

Afin de prévenir la formation et/ou l'accumulation des condensats, un bouchon 13 est prévu dans une ouverture 21 du carter 10. Le bouchon 13 est par exemple vissé dans cette ouverture 21. Le bouchon 13 comporte dans l'exemple considéré un corps 22 de forme annulaire, qui est métallique ou non, portant une membrane semi-perméable 131. Cette dernière est perméable à la vapeur d'eau mais imperméable à l'eau liquide. La membrane est par exemple réalisée en PTFE de type Goretex®. Le bouchon 13 permet à la vapeur d'eau contenue à l'intérieur du moteur de s'échapper à travers la membrane.

Conformément à l'invention, afin de favoriser la circulation d'air chargé de vapeur d'eau à travers la membrane 131, le bouchon 13 est placé dans une zone où la pression d'air est supérieure à la pression atmosphérique, de préférence sensiblement face à la sortie d'air 31 du ventilateur 12, comme illustré.

Dans l'exemple considéré, le bouchon 13 est ainsi placé du côté arrière du moteur sensiblement en face des passages 32 d'entrée d'air dans les canaux 16. Le bouchon 13 peut être disposé en partie supérieure du moteur, comme illustré, ou dans une variante non représentée, en partie inférieure, de façon à présenter une fonction de purge également, le cas échéant.

La membrane 131 peut être fixée par tout moyen adapté sur le corps 22. Un joint torique 23 peut être porté par le bouchon 13 et s'appliquer sur le carter quand le bouchon 13 est en place.

L'invention n'est pas limitée à l'exemple qui vient d'être décrit et peut s'appliquer à des moteurs électriques dans des applications autres que marines. Le liquide de refroidissement peut circuler en boucle fermée entre le moteur et une installation de refroidissement de ce liquide ou en variante en circuit ouvert, l'eau injectée dans le moteur étant rejetée dans l'environnement, ce qui peut être le cas par exemple d'un refroidissement avec de l'eau de mer.

Le ventilateur 12 peut être entraîné non pas par l'arbre du rotor mais par une machine d'entraînement spécifique.

L'expression « comportant » doit être comprise comme étant synonyme de « comprenant au moins », sauf si le contraire est spécifié.

## Revendications

1. Moteur électrique comportant un carter pourvu d'une ouverture (21) munie d'une membrane (131) formant barrière à l'eau liquide entre l'intérieur et l'extérieur dudit carter mais perméable à la vapeur d'eau, le moteur comportant un ventilateur interne (12) pour générer une circulation d'air forcée à l'intérieur du moteur, **caractérisé en ce que** le stator est refroidi par liquide et **en ce que** la membrane (131) est située dans une zone où la circulation d'air forcée expose celle-ci du côté intérieur à une pression supérieure à la pression atmosphérique .

2. Moteur électrique selon la revendication 1, la membrane (131) étant située dans la moitié du moteur la plus proche du ventilateur (12).

3. Moteur électrique selon l'une des revendications précédentes, la membrane comportant un matériau poreux fluoré, de préférence comportant du PTFE.

4. Moteur électrique selon l'une quelconque des revendications précédentes, la membrane (131) étant portée par un bouchon (13) fixé de façon amovible sur le carter.

5. Moteur électrique selon la revendication précédente, le bouchon étant configuré pour se visser dans l'ouverture (21).

6. Moteur électrique selon l'une quelconque des revendications précédentes, l'ouverture (21) étant disposée en partie supérieur du carter.

7. Moteur électrique selon l'une quelconque des revendications précédentes, le ventilateur (12) étant à éjection radiale.

8. Moteur selon l'une quelconque des revendications 1 à 7, la membrane occupant, sur l'axe (X) de rotation, une position axiale qui se recoupe au moins partiellement avec celle du ventilateur.

9. Moteur électrique selon l'une quelconque des revendications précédentes, l'air circulant dans des canaux de circulation au stator qui sont radialement plus extérieurs que ceux servant à la circulation du liquide de refroidissement.

10. Procédé de refroidissement d'un moteur électrique selon l'une quelconque des revendications 1 à 9 comportant un carter, dans lequel on génère une circulation d'air forcée et une circulation de liquide, le moteur électrique comportant une membrane (131) imperméable à l'eau liquide mais perméable à la vapeur d'eau, la membrane étant située dans une partie du carter où la pression d'air à l'intérieur du moteur est supérieure à la pression atmosphérique.

## Patentansprüche

1. Elektromotor, der ein Gehäuse umfasst, das mit einer Öffnung (21) versehen ist, die mit einer Membran (131) ausgestattet ist, die eine Barriere für flüssiges Wasser zwischen dem Innenraum und dem Außenraum des Gehäuses bildet, aber für Wasserdampf durchlässig ist, wobei der Motor ein internes Gebläse (12) umfasst, um eine erzwungene Luftzirkulation im Innenraum des Motors zu erzeugen, **dadurch gekennzeichnet, dass** der Stator flüssigkeitsgekühlt ist und dass die Membran (131) in einem Bereich gelegen ist, in dem die erzwungene Luftzirkulation sie auf der Innenseite einem Druck aussetzt, der höher als der atmosphärische Druck ist.

2. Elektromotor nach Anspruch 1, wobei die Membran (131) in der dem Gebläse (12) nächstgelegenen Hälfte des Motors gelegen ist.

3. Elektromotor nach einem der vorhergehenden Ansprüche, wobei die Membran ein fluoriertes poröses Material umfasst, bevorzugt PTFE umfasst.

4. Elektromotor nach einem der vorhergehenden Ansprüche, wobei die Membran (131) von einem Stopfen (13) getragen wird, der lösbar am Gehäuse befestigt ist.

5. Elektromotor nach dem vorhergehenden Anspruch, wobei der Stopfen dazu ausgelegt ist, in die Öffnung (21) geschraubt zu werden.

6. Elektromotor nach einem der vorhergehenden Ansprüche, wobei die Öffnung (21) im oberen Teil des Gehäuses angeordnet ist.

7. Elektromotor nach einem der vorhergehenden Ansprüche, wobei das Gebläse (12) ein Radialstrahlgebläse ist.

8. Motor nach einem der Ansprüche 1 bis 7, wobei die Membran auf der Drehachse (X) eine axiale Position einnimmt, die sich zumindest teilweise mit der des Gebläses überschneidet.

9. Elektromotor nach einem der vorhergehenden Ansprüche, wobei die Luft in Zirkulationskanälen am Stator zirkuliert, die radial weiter außen liegen als diejenigen, die der Zirkulation der Kühlflüssigkeit dienen.

10. Verfahren zum Kühlen eines Elektromotors nach einem der Ansprüche 1 bis 9, der ein Gehäuse umfasst, in dem eine erzwungene Luftzirkulation und eine Flüssigkeitszirkulation erzeugt wird, wobei der Elektromotor eine Membran (131) umfasst, die für das flüssige Wasser undurchlässig ist, aber für den Wasserdampf durchlässig ist, wobei die Membran in einem Teil des Gehäuses gelegen ist, in dem der Luftdruck im Innenraum des Motors höher als der atmosphärische Druck ist.

## Claims

1. Electric motor comprising a housing provided with an opening (21) equipped with a membrane (131) forming a barrier to liquid water between the inside and the outside of the said housing but permeable to water vapour, the motor comprising an internal fan (12) to generate a forced circulation of air inside the motor, **characterized in that** the stator is liquid cooled and **in that** the membrane (131) is situated in a region in which the forced circulation of air exposes it on the inside to a pressure higher than atmospheric pressure.

2. Electric motor according to Claim 1, the membrane (131) being situated in the half of the motor that is closest to the fan (12).

3. Electric motor according to one of the preceding claims, the membrane comprising a fluorinated porous material, preferably comprising PTFE.

4. Electric motor according to any one of the preceding claims, the membrane (131) being carried by a plug (13) fixed removably to the housing.

5. Electric motor according to the preceding claim, the plug being configured to be screwed into the opening (21).

6. Electric motor according to any one of the preceding claims, the opening (21) being arranged in the upper part of the housing.

7. Electric motor according to any one of the preceding claims, the fan (12) being a radial-flow fan.

8. Motor according to any one of Claims 1 to 7, the membrane occupying, on the axis (X) of rotation, an axial position that at least partially intersects that of the fan.

9. Electric motor according to any one of the preceding claims, the air circulating along ducts for circulation to the stator which are radially further out than those used for circulating the cooling liquid.

10. Method for cooling an electric motor according to any one of Claims 1 to 9 comprising a housing, in which method a forced circulation of air and a circulation of liquid are generated, the electric motor comprising a membrane (131) that is impermeable to liquid water but permeable to water vapour, the membrane being situated in a part of the housing where the air pressure on the inside of the motor is higher than atmospheric pressure.
